(19) **Europäisches Patentamt**

**European Patent Office**

**Office européen des brevets**

(11) **EP 0 725 470 B1**

(12) **EUROPEAN PATENT SPECIFICATION**

(45) Date of publication and mention
of the grant of the patent:
**03.07.2002 Bulletin 2002/27**

(51) Int Cl.⁷: **H02H 7/055**, G05F 1/70

(21) Application number: **96101618.5**

(22) Date of filing: **05.02.1996**

(54) **Phase-shifting transformer and protection system of phase-shifting transformer**

Phasenverschiebungstransformator und Schutzsystem eines Phasenverschiebungstranformators

Transformateur déphaseur et système de protection d'un transformation déphaseur

(84) Designated Contracting States:
**DE GB IT SE**

(30) Priority: **06.02.1995 JP 1766295**

(43) Date of publication of application:
**07.08.1996 Bulletin 1996/32**

(73) Proprietor: **Hitachi, Ltd.**
**Chiyoda-ku, Tokyo 101 (JP)**

(72) Inventors:
• **Uchiyama, Noriyuki**
**Hitachi-shi, Ibaraki 319-12 (JP)**
• **Inagaki, Keizo**
**Hitachi-shi, Ibaraki 316 (JP)**

(74) Representative: **Strehl Schübel-Hopf & Partner**
**Maximilianstrasse 54**
**80538 München (DE)**

(56) References cited:
• **IEEE TRANSACTIONS ON POWER DELIVERY,
JAN. 1994, USA, vol. 9, no. 1, ISSN 0885-8977,
pages 394-404, XP002002671 IBRAHIM M A ET
AL: "Phase angle regulating transformer
protection"**
• **PATENT ABSTRACTS OF JAPAN vol. 011, no.
233 (P-600), 30 July 1987 & JP-A-62 046315
(TOSHIBA CORP), 28 February 1987,**

Remarks:
The file contains technical information submitted
after the application was filed and not included in this
specification

# Description

Background of the Invention:

The present invention relates to a phase-shifting transformer and a protection system of a phase-shifting transformer, in particularly to suitable for a phase-shifting transformer and a protection system of a phase-shifting transformer, the above phase-shifting transformer comprises a transformer, which is inserted into a power system for shifting the voltage-phase of the power system or both of the voltage-phase and the voltage value of the power system, and a regulating transformer for supplying the voltage to the above former transformer so as to regulate the phase-shifting.

In a conventional electric power transformer, in generally an internal fault is detected in accordance with the differential current of each of windings of the transformer and the electric power transformer is protected in accordance with a result of the above current detection.

Besides, during such an electric power throw-in time of the electric power transformer the inrush current is generated when a core of the transformer has been the magnetic saturation. Since the above stated inrush current is detected also as the differential current, as a result it is necessary to discriminate the internal fault and the core magnetic saturation through for some method or other.

The differential current in the core magnetic saturation etc. is generally constituted by a simple polarity characteristic half-wave form. And since the differential current in the core magnetic saturation etc. includes many second harmonic components, it can judge the internal fault and the core magnetic saturation in accordance with the second harmonic components.

Besides, in such a load ratio control transformer, in case where the voltage value of an output side is regulated by changing over a tap of a tap winding of the transformer, since the turn number of the tap winding is varied by an operating tap it is difficult to carry out the turn number execution using the current value, thereby it is impossible to employ the method using the differential current as stated in above.

In generally in the transformer having the tap winding, it employs a current-phase comparison system, for example as described in a paper "Protective Relaying Equipment for 500 kV System", Hitachi Review, Vol. 56, No. 3, pages 13-18.

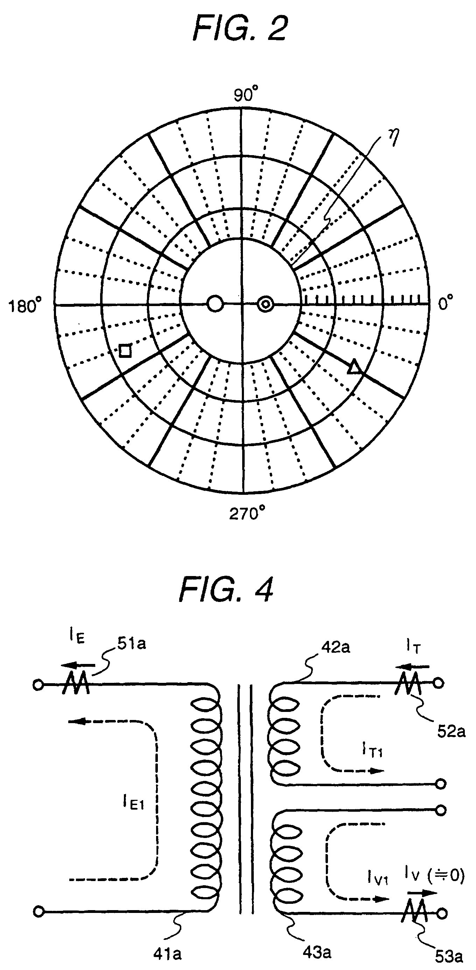

A current relay is used in the above current-phase comparison system, and with this current relay the internal fault is detected using a current ratio of $I_E$ /$I_T$ ($I_E$ : the regulating winding current; $I_T$ : the tap winding current) and the phase. The characteristic of this current relay is shown in Fig. 2.

Namely, Fig. 2 shows the characteristic of the relay current using the current ratio of $I_E$ / $I_T$. In Fig. 2, ○ mark shows a normal condition or an external fault, ⊚ mark shows another normal condition or another external fault, □ mark shows an internal fault (No. 1) and △ mark shows another internal fault (No. 2) and η shows a judging ratio (a threshold value) for judging the normal condition, the external fault and the internal fault.

In generally since the tap winding becomes a side of the low voltage the tap winding current $I_T$ is larger than the regulating winding current $I_E$, at the normal condition the current ratio of $I_E$ / $I_T$ is smaller than 1 and substantially corresponds to the turn ratio. However, in the internal fault condition, by the affect of the accident current the current ratio of $I_E$ / $I_T$ becomes a comparative large value in comparison with that of the normal condition.

Using the above stated characteristic, when the current ratio of $I_E$ / $I_T$ exceeds a predetermined value, it judges as the internal fault in the transformer. In an example shown in Fig. 2, the phase information is not used, however it can judge using the phase information in addition to the current ratio of $I_E$ / $I_T$.

In the above stated conventional technique using the current relay, the internal fault can be detected by using the current ratio of $I_E$ / $I_T$ between the regulating winding current $I_E$ and the tap winding current $I_T$.

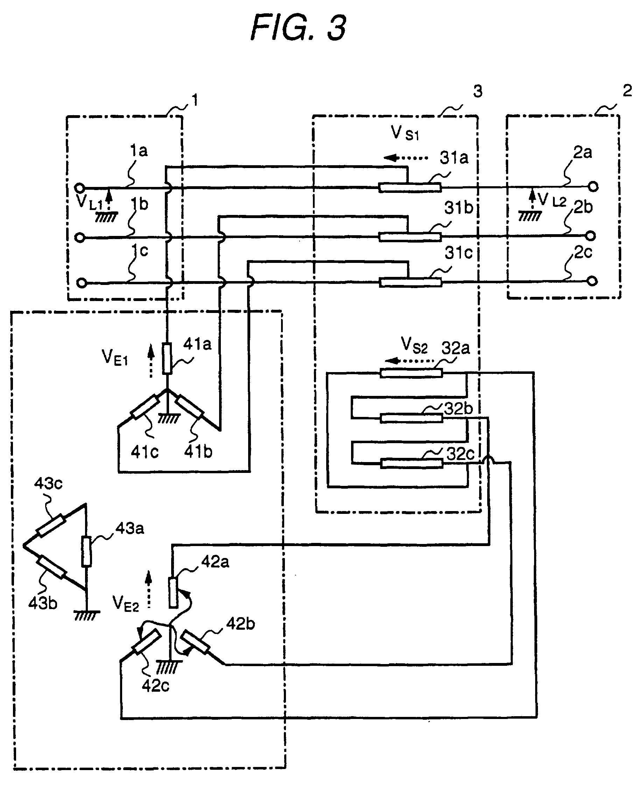

Herein, as shown in Fig. 3, the phase-shifting transformer has a regulating winding connected to in parallel to a power system, and a tap winding having a tap element and for supplying a predetermined voltage to an exciting winding of a series transformer and further this phase-shifting transformer has a stabilizing winding connected in a delta connection form so as to restrain the third harmonic component.

In Fig. 3, a system of the phase-shifting transformer is shown, this transformer comprises a series transformer 3 connected in series to power systems 1 and 2, a regulating transformer 4 connected to in parallel the power systems 1 and 2, and transmission lines 1a, 1b and 1c of the power system 1 and transmission lines 2a, 2b and 2c of the power system 2 to which the series transformer 3 and the regulating transformer 4 are connected.

The series transformer 3 comprises series windings 31a, 31b and 31c connected in series to the transmission lines 1a, 1b and 1c of the power system 1 and the transmission lines 2a, 2b and 2c of the power system 2, exciting windings 32a, 32b and 32c for supplying the voltage to the series windings 31a, 31b and 31c, and a core (not shown in figure) in which the series windings 31a, 31b and 31c and the exciting winding 32a, 32b and 32c are woundingly arranged.

The regulating transformer 4 comprises regulating windings 41a, 41b, 41c connected to in parallel the power systems 1 and 2, tap windings 42a, 42b and 42c for supplying a predetermined voltage to the exciting winding 32a, 32b and 32c of the series transformer 3, stabilizing windings 43a, 43b and 43c connected to in the delta connection form, and a core (not shown in figure) in which the regulating windings 41a, 41b and 41c and the tap windings 42a, 42b and 42c are woundingly arranged. Herein, each of the suffix letters a, b, c denotes a-phase, b-phase, c-phase, respectively.

In case the winding construction in above, in the current phase comparison method according to the above stated conventional technique, since the method uses only the current information of two windings which are the regulating windings 41a, 41b and 41c and the tap windings 42a, 42b and 42c, it occurs the state in which it can not clearly judge whether the internal fault appears or the external fault appears in the transformer.

IEEE Transaction on Power Delivery, January 1994, USA, vol. 9, No. 1, ISSN 0885-8977, pages 394 to 404, discloses a transformer system with the features included in the first part of claim 1. In the known system, a phase-angle regulated transformer is protected by dual DC battery systems, individual current transformer secondary windings for each system, and physical separation of wiring and devices.

Summary of the Invention:

The present invention is devised taking into the consideration of the above stated points, one object of the present invention is to provide a phase-shifting transformer and a protection system of a phase-shifting transformer wherein by overcoming the above stated inconveniences in the conventional technique the internal fault can be surely detected even in a phase-shifting transformer which has a third winding in addition to a tap winding and a regulating winding.

So as to solve the above problems in the conventional technique, in the phase-shifting transformer according to the present invention, it employs all current information about all windings of the regulating winding, the tap winding and the stabilizing winding which constitute the regulating transformer.

In other words, in the phase-shifting transformer according to the present invention, at least it uses a current ratio $I_E + I_V / I_T$ ($I_E$ : regulating winding current, $I_V$ : stabilizing winding current, $I_E + I_V$ : differential winding current, $I_T$ : tap winding current), or it uses in case the above stated current ratio is larger than a current ratio of the system accident which accompanies with the core magnetic saturation, thereby only the internal fault can be surely detected in regardless of the installation position of the tap element.

Phase shifting transformer protection systems and corresponding protecting methods according to the invention are defined in claims 1 to 12.

The operation of the phase-shifting transformer according to the present invention will be concretely explained.

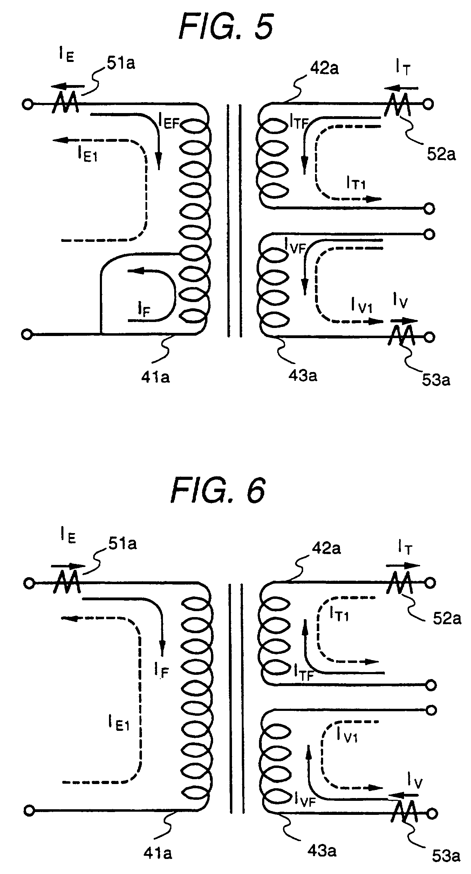

Fig. 4 is a schematic view showing the current distribution flowing into each of the windings of a-phase of a regulating transformer during the normal condition.

A dot line arrow line in this figure shows the flow of load current components. In this figure, 41a denotes the regulating winding, 42a denoted the tap winding, and 43a denotes the stabilizing winding.

$I_E$, $I_T$ and $I_V$ show the currents of the regulating winding 41a, the tap winding 42a and the stabilizing winding 43a, respectively. $I_{E1}$, $I_{T1}$ and $I_{V1}$ show the load current components of the regulating winding 41a, the tap winding 42a and the stabilizing winding 43a, respectively. 51a, 52a and 53a denote current transformers for detecting the currents $I_E$, $I_T$ and $I_V$, respectively.

As already known, during the normal condition the current distribution presents one in which the magnetomotive force according to the regulating winding current $I_E$ denies by the tap winding current $I_T$ and the stabilizing winding current $I_V$.

However, since the stabilizing winding is connected in the delta connection form and does not burden the load, as the stabilizing winding current $I_V$ it is detected only extremely small current component ($\fallingdotseq 0$) which circulates in the delta connection form.

Accordingly, each of the current ratio $I_E / I_T$ used in the conventional technique and the current ratio $(I_E + I_V) / I_T$ obtained by according to the present invention has substantially equal value which is a turn number ratio between the regulating winding and the tap winding.

Fig. 5 is a schematic view showing the current distribution flowing into each of the windings of the regulating transformer during the internal fault condition.

In this figure, real line arrow marks express the accident current components $I_{EF}$, $I_{TF}$ and $I_{VF}$ which are included in the current of each of the windings, and dot line arrow marks express the load current components $I_{E1}$, $I_{T1}$ and $I_{V1}$. $I_F$ denotes the accident current. In this figure, the parts same to the parts shown Fig. 4 have the same reference numbers.

In case of the internal fault condition such as a short circuit, it can be considered that into the regulating winding 41a, the tap winding 42a and the stabilizing winding 43a the accident current component $I_{EF}$, $I_{TF}$ and $I_{VF}$ for denying the magnetomotive force according to the accident current $I_F$ flows in addition to the load current components $I_{E1}$, $I_{T1}$ and $I_{V1}$.

In generally the accident current component is larger than the load current component, as shown in figure, each of the regulating winding current $I_E$, the tap winding current $I_T$, and the stabilizing winding current $I_V$ has same substantial phase and is the negative phase against the accident current $I_F$.

Further, each of the regulating winding current $I_E$, the tap winding current $I_T$ becomes comparatively large in regardless of the turn number ratio in comparison with that of the normal condition and the extremely large circulation current $I_V$ flows into the stabilizing winding in comparison with the normal condition.

Accordingly, each of the current ratio $I_E / I_T$ used in the conventional technique and the current ratio $(I_E + I_V) / I_T$ obtained by the present invention has large value in comparison with the normal condition, further since the regulating winding current $I_E$ and the stabilizing winding current $I_V$ has the substantial positive phase, and further the current ratio $(I_E + I_V)/I_T$ becomes large.

Fig. 6 is a schematic view showing the current distribution flowing into each of the windings of the regulating transformer during the external fault condition.

In this figure, real line arrow marks express the accident current components $I_{TF}$ and $I_{VF}$ which are included in the current of each of the windings, and dot line arrow marks express the load current component $I_{E1}$, $I_{T1}$ and $I_{V1}$. In this figure, the parts same to the parts shown Fig. 4 and Fig. 5 have the same reference numbers.

In case of the external fault condition, it can be considered that into the regulating winding 41a, the tap winding 42a and the stabilizing winding 43a the accident current components $I_{TF}$ and $I_{VF}$ for denying the magnetomotive force according to the accident current $I_F$ flows in addition to the load current components $I_{E1}$, $I_{T1}$ and $I_{V1}$.

In this case, similar to the normal condition the current distribution becomes to deny the magnetomotive force according to the regulating winding current $I_E$ by the tap winding current $I_T$ and the stabilizing winding current $I_V$. The different point compared with the normal condition is that the circulation current $I_V$ having the non-negligible level flows into the stabilizing winding.

Accordingly, the value of the current ratio $I_E / I_T$ used in the conventional technique is larger than the turn number ratio and it is the possibility in which the value of the current ratio becomes substantially same to the internal fault condition.

However, in case that the current ratio $(I_E + I_V) / I_T$ obtained by the present invention uses, the phase of the regulating winding current $I_E$ and the phase stabilizing winding current $I_V$ are the substantially negative phase, the turn number is some large in comparison with that of the normal condition but becomes surely small in comparison with the that of the internal fault condition.

As a result, in accordance with the present invention, when it is suitably set the judgment value with respect to the current ratio, the internal fault condition can be surely detected. Further, when the phase information is added to the above, the internal fault condition can be surely detected.

Brief Description of Drawings:

Fig. 1 is a system view showing one embodiment of a phase-shifting transformer according to the present invention;
Fig. 2 is a characteristic view showing a current comparison relay used in a conventional current-phase comparison system;
Fig. 3 is a system view showing a general phase-shifting transformer;
Fig. 4 is a view showing a current distribution of each winding during a normal condition so as to explain an operation according to the present invention;
Fig. 5 is a view showing a current distribution of each winding during an internal fault so as to explain an operation according to the present invention;
Fig. 6 is a view showing a current distribution of each winding during an external fault so as to explain an operation according to the present invention;
Fig. 7 is a system view showing another embodiment of a phase-shifting transformer according to the present invention; and
Fig. 8 is a system view showing a further embodiment of a phase-shifting transformer according to the present invention.

Description of the Invention:

Hereinafter, one embodiment of a phase-shifting transformer and a method of protecting a phase-shifting transformer according to the present invention will be explained referring to an illustrated embodiment.

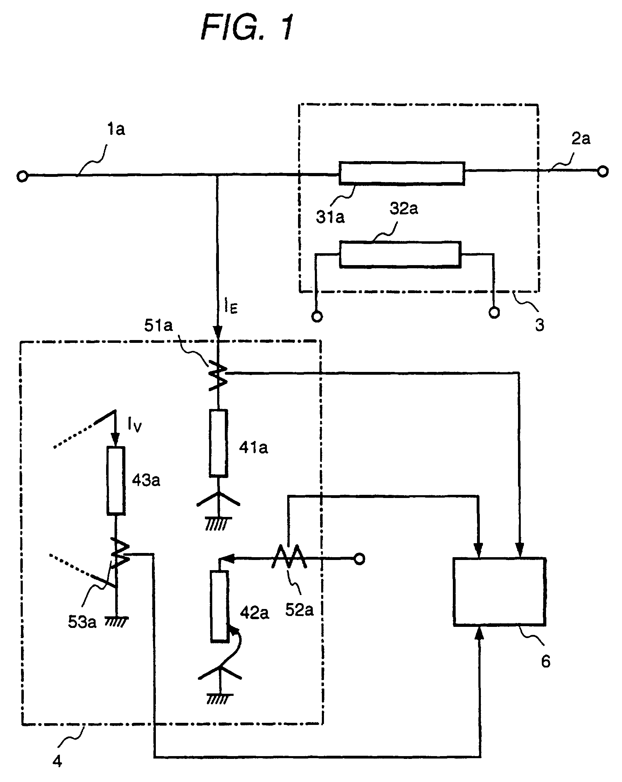

Fig. 1 is a system view showing a-phase as one phase among three phases of a series transformer connected in series to a power system and a regulating transformer connected in parallel to the power system. The parts same to that of shown in Fig. 3 have the same reference numbers.

In Fig. 1, 1a and 2a denote transmission lines of power systems 1 and 2 to which a series transformer 3 and a regulating transformer 4 are connected, 3 denotes the series transformer connected in series to the power systems 1 and 2, 4 denotes the regulating transformer connected in parallel to the power systems 1 and 2, and 6 denotes a part of a protection equipment of the phase-shifting transformer according to the present invention.

The series transformer 3 is constituted by a series winding 31a connected in series to the transmission lines 1a and 2b, an exciting winding 32a for supplying the voltage to the series winding 31a, and a core (not shown in figure) in which the series winding 31a and the exciting winding 32a are woundingly arranged.

The regulating transformer 4 is constituted by a regulating winding 41a connected in parallel to the power systems 1 and 2, a tap winding 42a for supplying a predetermined voltage to the exciting winding 31a of the series transformer 3, a stabilizing winding 43a connected in the delta connection form and a core (not shown in figure) in which the regulating winding 41a and the tap winding 42a are woundingly arranged.

51a, 52a and 53a denote current transformers, and each of these current transformers 51a, 52a and 53a detects the current of the regulating winding 41a, the current of the tap winding 42a and the current of the stabilizing winding 43a, respectively.

The protection equipment 6 according to the present invention detects the internal fault in accordance with a current ratio $(I_E + I_V) / I_T$, which is a ratio of the differential current $(I_E + I_V)$ between the regulating winding current $I_E$ and the stabilizing winding current $I_V$ and the tap winding current $I_T$ detected by the current transformer 53a and the phase.

When it expresses a threshold value for judging the internal fault condition and the external fault condition as $\eta$, as explained in above.

$$(I_E + I_V) / I_T < \eta \qquad \text{Equation 1}$$

When the above Equation 1 is constituted, it judge as the case of the normal condition or the external fault condition.

$$(I_E + I_V) / I_T > \eta \qquad \text{Equation 2}$$

When the above Equation 2 is constituted, it judge as the case of the internal fault condition.

Herein, the threshold value $\eta$ can be varied according to the phase.

Further, when $(I_E + I_V + I_T) / I_T$ is used as the current ratio, the internal fault condition can be surely detected, Hereinafter, the reasons of the above will be explained as following.

Fig. 5 is a schematic view showing the current distribution flowing into each of the windings of the regulating transformer 4 during the internal fault condition.

As explained in the above, at the internal fault condition such a winding short circuit, it is considered that the regulating winding current $I_E$, the tap winding current $I_T$ and the stabilizing winding current $I_V$ has the distribution so as to deny the magnetomotive force according to the accident current $I_F$.

As a result, as shown in figure, each of the phases of the regulating winding current $I_E$, the tap winding current $I_T$ and the stabilizing winding current $I_V$ has mutually the substantially same phase and has the negative phase against the accident current $I_F$.

Further, the values of the regulating winding current $I_E$, the tap winding current $I_T$ become large in comparison with that of the normal condition in regardless of the turn number ratio and also the circulation current $I_V$ having the comparative value in comparison with that of the normal condition flows into the stabilizing winding.

Accordingly, each of the current ratio $I_E / I_T$ used in the conventional technique and the current ratio $(I_E + I_V) / I_T$ used in the present invention has the large value in comparison with that of the normal condition and the current ratio $(I_E + I_V) / I_T$ becomes the large value.

Further, the regulating winding current $I_E$ and the tap winding current $I_T$ have the same phase relationship. Accordingly, the current ratio $(I_E + I_V + I_T) / I_T$ has further the larger value than the current ratio $(I_E + I_V) / I_T$.

Fig. 6 is a schematic view showing the current distribution flowing into each of the windings of the regulating transformer 4 during the external fault condition.

In this case, similarly to the normal condition, the current distribution denies the magnetomotive force according to the regulating winding current $I_E$ by the tap winding current $I_T$ and the stabilizing winding current $I_V$.

The different point with the normal condition is that the circulation current $I_V$ having the non-negligible level flows into the stabilizing winding.

Accordingly, the value of the current ratio $I_E / I_T$ used in the conventional technique is larger than the turn number ratio, thereby it has the possibility in which the value is the substantially same degree value at the internal fault condition.

However, when the current ratio $(I_E + I_V) / I_T$ according to the present invention uses, since the phase of the regulating winding current $I_E$ becomes the substantial negative phase against the stabilizing winding current $I_V$, the value becomes large some, but it becomes surely small in comparison with that of the internal fault condition.

Further, the relationship between the phase of the regulating winding current $I_E$ and the phase of the tap winding current $I_T$ becomes the negative phase. As a result, the current ratio $(I_E + I_V + I_T) / I_T$ closes to the normal condition in comparison with the current ratio $(I_E + I_V) / I_T$.

Accordingly, the current ratio $(I_E + I_V + I_T) / I_T$ between the external fault condition and the internal fault condition becomes more remarkably and the reliability more further increases. However, when the tap winding current $I_T$ converts to the turn number, the turn number of the tap winding is varied according to the operation tap, for example, as the turn number it uses a half value.

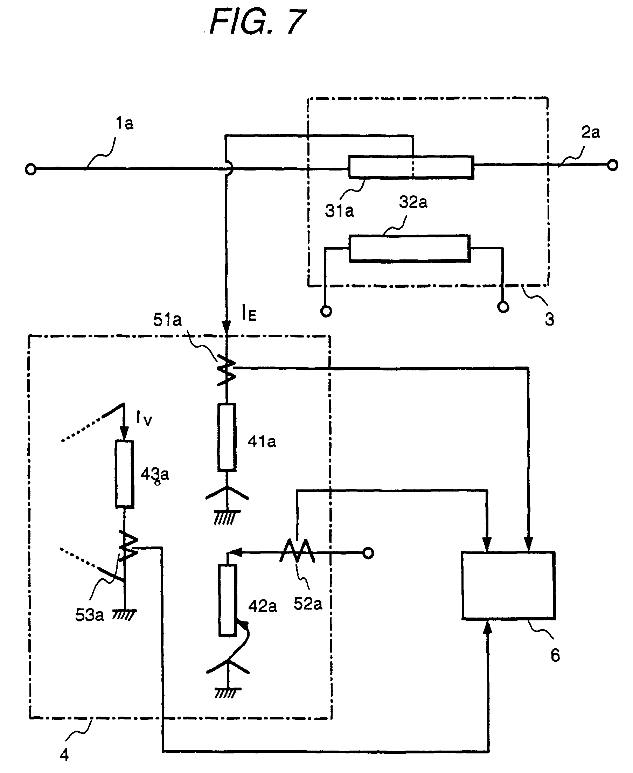

Next, another embodiment of a phase-shifting transformer according to the present invention will be explained referring to Fig. 7. In Fig. 7, the parts same to those of shown in Fig. 1 have the same reference numbers.

In the construction shown in Fig. 7, the part different from that of shown in Fig. 1 is that the voltage of the regulating transformer 4 connected in parallel to the power systems 1 and 2 does not take from the transmission line 1a of the power system 1 but takes from a central portion of the series winding 31a of the series transformer 3. In this case, the internal fault can detect according to the above stated method.

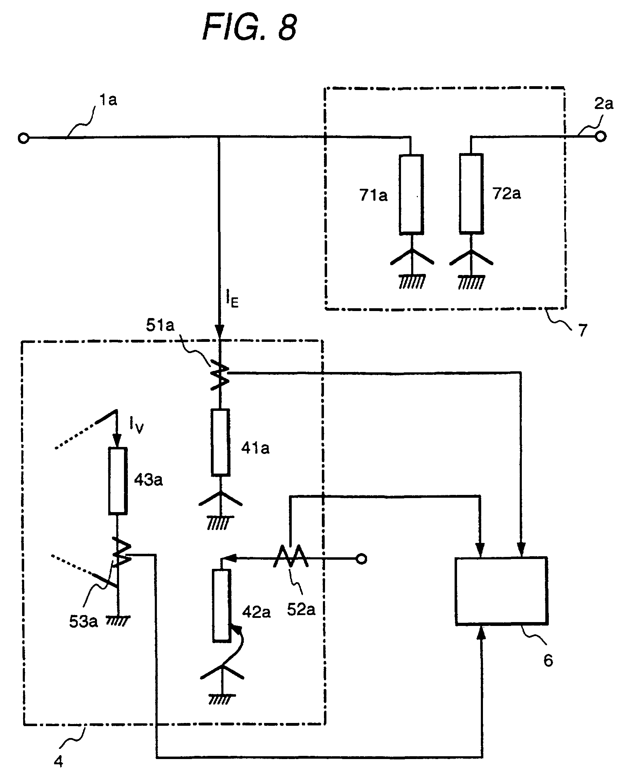

A further embodiment of a phase-shifting transformer according to the present invention will be explained referring to Fig. 8. In Fig. 8, the parts same to those of shown in Fig. 1 have the same reference numbers.

In the construction shown in Fig. 8, the part different from that of shown in Fig. 1 is that the voltage of the tap winding of the regulating transformer 4 connected in parallel to the power systems 1 and 2 is supplied to a primary winding 71a and a secondary winding 72a of a main transformer 7 connected in parallel to the power systems 1 and 2.

In this case, the internal fault condition can be detected according to the above stated method. However, the electric connection of the main transformer 7 is not particularly limited.

A tap changer is connected to the tap winding 42a of the regulating transformer 4 of this embodiments stated in above. As to this tap change-over switch, it can use a mechanical switch, a semiconductor switch (a thyristor, a light arc thyristor). In the above stated protection method, it does not limit to the above stated tap change-over switch structure.

When the mechanical switch uses as the tap changer, the large current capacity can obtain in comparison with other switches, however, so as to generate the arc at a contact during the change-over time it is necessary to perform the periodic maintenance or since a movable portion exits it causes a problem about the increase in the mechanical trouble.

Further, when the semiconductor switch uses as the tap changer, it is possible to carry out the high speed control and also since the contactless performs the frequency of the maintenance can be lessened.

Besides, in the protection equipment of the phase-shifting transformer, it is hardly to output a trip command of the transformer according to only the judgment result of a relay element detected the internal fault of the transformer.

However, from the standpoints of the error motion prevention or the error non-motion prevention, in generally the judgment result of plural relay elements are generally judged, thereby the trip command is outputted to a circuit breaker.

In the present invention, it relates to one relay element in the above stated protection equipment of the phase-shifting transformer, the whole structure of the protection equipment of the transformer is not particularly limited.

With the phase-shifting transformer and the protection system of the phase-shifting transformer according to the present invention, all current information about the windings of the regulating winding, the tap winding and the stabilizing winding for constituting the regulating transformer, in other words, since it uses at least the current ratio $(I_E + I_V) / I_T$ which is the ratio of the differential current $(I_E + I_V)$ between the regulating winding current $I_E$ and the stabilizing winding current $I_V$ and the tap winding $I_T$, or it uses that this current ratio is larger than the current ratio of the system accident condition in accompanying with the core magnetic saturation, even in the phase-shifting transformer having the third winding in addition to the tap winding and the regulating winding, the internal fault condition can be surely detected and thereby the reliability of the whole protection equipment can be improved.

**Claims**

1. A phase-shifting transformer system connected to a power system (1; 2) and comprising

    a first transformer (3; 7) inserted into the power system (1; 2) for shifting the voltage-phase of the power system or for shifting the voltage-phase and the voltage value of the power system;
    a regulating transformer (4) connected in parallel to the power system for supplying the voltage to the first transformer (3; 7) so as to regulate the phase-shifting, the regulating transformer (4) having regulating winding (41) connected in parallel to the power system, and a tap winding (42) with a tap element for supplying a predetermined phase regulating voltage to the first transformer; and
    protection means (6) for judging an internal fault of the regulating transformer (4);

    **characterised in that** the regulating transformer (4) further comprises a stabilising winding (43) connected in a delta connection form, and **in that** the protection means (6) judges as an internal fault condition when the ratio or the phase of the differential current of the regulating winding (41) and the stabilising winding (43) with respect to the current of the tap winding (42) exceeds a predetermined value, whereby the phase-shifting transformer is protected.

2. The system of claim 1, wherein the first transformer is a series transformer (3) inserted in parallel into the power system (1; 2) and having a series winding (31) and an exciting winding (32) for supplying the voltage to the series winding.

3. The system of claim 2, wherein one terminal of the regulating winding (41) of the regulating transformer (4) is connected to an intermediate portion of the series winding of the series transformer (3).

4. The system of claim 1, wherein the first transformer is a main transformer (7) inserted in parallel into the power system (1; 2).

5. The system of any preceding claim, wherein the regulating transformer (4) has semiconductor change-over switching means as a tap changer for the tap winding (42).

**6.** The system of any preceding claim, wherein said predetermined value is the ratio and, respectively, the phase of a system accident condition accompanying a core magnetic saturation.

**7.** A method of protecting a phase-shifting transformer system according to any preceding claim, wherein the existence of an internal fault condition of the regulating transformer (4) is judged by the ratio or the phase of the differential current of the regulating winding (41) and the stabilising winding (43) with respect to the current of the tap winding (42).

**8.** A method of protecting a phase-shifting transformer system according any one of claims 1 to 6, wherein the existence of an internal fault condition of the regulating transformer (4) is judged from the currents of the regulating winding (41), the tap winding (42) and the stabilising winding (43) of the regulating transformer (4).

**9.** A method of protecting a phase-shifting transformer system according any one of claims 1 to 6, wherein the existence of an internal fault condition of the regulating transformer (4) is judged when the current ratio of the differential current of the regulating winding (41) and the stabilising winding (43) with respect to the tap winding (42) exceeds a predetermined value.

**10.** The method of claim 9, wherein said predetermined value is larger than the current ratio of a system accident accompanying a core magnetic saturation.

**11.** A method of protecting a phase-shifting transformer system according any one of claims 1 to 6, wherein

a normal condition or an external fault condition of the regulating transformer (4) is judged when the current ratio of the differential current of the regulating winding (41) and the stabilising winding (43) with respect to the tap winding (42) is smaller than a threshold value, and an internal fault condition of the regulating transformer (4) is judged when said current ratio is larger than said threshold value.

**12.** A method of protecting a phase-shifting transformer system according any one of claims 1 to 6, wherein an internal fault condition of the regulating transformer (4) is judged from the currents of the stabilising winding (43) and the regulating winding (41) of the regulating transformer (4).

**Patentansprüche**

**1.** Phasenverschiebungstransformator-System, das an ein Stromversorgungssystem (1; 2) angeschlossen ist und folgendes umfaßt:

einen ersten Transformator (3, 7), der in das Stromversorgungssystem (1; 2) eingesetzt ist, um die Spannungsphase oder die Spannungsphase und den Spannungswert des Stromversorgungssystems zu verschieben; einen Regeltransformator (4), der parallel zum Stromversorgungssystem geschaltet ist, um die Spannung an den ersten Transformator (3; 7) zu liefern, um die Phasenverschiebung zu regulieren, wobei der Regeltransformator (4) eine Regelwicklung (41), die parallel zum Stromversorgungssystem geschaltet ist, und eine Anzapfwicklung (42) mit einem Anzapfelement enthält, um eine bestimmte Phasenregulierungsspannung an den ersten Transformator zu liefern; und eine Schutzeinrichtung (6), um eine interne Fehlfunktion des Regeltransformators (4) zu erkennen;

**dadurch gekennzeichnet, daß** der Regeltransformator (4) ferner eine in Dreieckschaltung angeschlossene Stabilisierungswicklung (43) umfaßt und die Schutzeinrichtung (6) eine interne Fehlerbedingung erkennt, wenn das Verhältnis oder die Phase der Differenzspannung der Regelwicklung (41) und der Stabilisierungswicklung (43) hinsichtlich der Anzapfwicklung (42) einen bestimmten Wert überschreitet, wodurch der Phasenverschiebungstransformator geschützt wird.

**2.** System nach Anspruch 1, wobei der erste Transformator ein parallel zum Stromversorgungssystem (1; 2) geschalteter Reihentransformator (3) ist und eine Reihenwicklung (31) sowie eine Erregerwicklung (32) aufweist, um die Spannung der Reihenwicklung zur Verfügung zu stellen.

**3.** System nach Anspruch 2, wobei ein Anschluß der Regelwicklung (41) des Regeltransformators (4) an einen mittleren Abschnitt der Reihenwicklung des Reihentransformators (3) angeschlossen ist.

**4.** System nach Anspruch 1, wobei der erste Transformator als Haupttransformator (7) parallel in das Stromversorgungssystem (1; 2) eingesetzt ist.

**5.** System nach einem der vorhergehenden Ansprüche, wobei der Regeltransformator (4) eine Halbleiterwechselschalteinrichtung als Anzapfwechseler für die Anzapfwicklung (42) aufweist.

**6.** System nach einem der vorhergehenden Ansprüche, wobei der bestimmte Wert das Verhältnis und die zugehörige Phase einer Systemstörungsbedingung ist, die bei einer Sättigungsmagnetisierung des Kerns auftritt.

**7.** Verfahren zum Schützen eines Phasenverschiebungstransformator-Systems nach einem der vorhergehenden Ansprüche, wobei das Vorhandensein einer internen Fehlerbedingung des Regeltransformators (4) über das Verhältnis oder die Phase einer Differenzspannung von Regelwicklung (41) und Stabilisierungswicklung (43) hinsichtlich der Spannung der Anzapfwicklung (42) festgestellt wird.

**8.** Verfahren zum Schützen eines Phasenverschiebungstransformator-Systems nach einem der Ansprüche 1 bis 6, wobei das Vorhandensein einer internen Fehlerbedingung des Regeltransformators (4) über die Spannungen der Regelwicklung (41), der Anzapfwicklung (42) und der Stabilisierungswicklung (43) des Regeltransformators (4) festgestellt wird.

**9.** Verfahren zum Schützen eines Phasenverschiebungstransformator-Systems nach einem der Ansprüche 1 bis 6, wobei das Vorhandensein einer internen Fehlerbedingung des Regeltransformators (4) festgestellt wird, wenn das Spannungsverhältnis der Differenzspannung von Regelwicklung (41) und Stabilisierungswicklung (43) hinsichtlich der Anzapfwicklung (42) einen bestimmten Wert überschreitet.

**10.** Verfahren nach Anspruch 9, wobei der bestimmte Wert größer ist als das Spannungsverhältnis bei einem Systemfehler, der bei der Sättigungsmagnetisierung des Kerns auftritt.

**11.** Verfahren zum Schützen eines Phasenverschiebungstransformator-Systems nach einem der Ansprüche 1 bis 6, wobei

ein Normalzustand oder ein externer Fehlerzustand des Regeltransformators (4) festgestellt wird, wenn das Spannungsverhältnis der Differenzspannung von Regelwicklung (41) und Stabilisierungswicklung (43) hinsichtlich der Anzapfwicklung (42) kleiner als ein Grenzwert ist, und
ein interner Fehlerzustand des Regeltransformators (4) festgestellt wird, wenn dieses Spannungsverhältnis größer als der Grenzwert ist.

**12.** Verfahren zum Schützen eines Phasenverschiebungstransformator-Systems nach einem der Ansprüche 1 bis 6, wobei ein interner Fehlerzustand des Regeltransformators (4) aus den Spannungen der Stabilisierungswicklung (43) und der Regelwicklung (41) des Regeltransformators (4) bestimmt wird.

## Revendications

**1.** Système de transformateur déphaseur connecté à un système électrique (1 ; 32) et comprenant

un premier transformateur (3 ; 7) monté dans le système électrique (1 ; 2) pour déphaser la tension du système électrique ou pour déphaser la tension et modifier la valeur de tension du système électrique ;
un transformateur de régulation (4) monté en parallèle avec le système électrique pour fournir la tension au premier transformateur (3 ; 7) de façon à réguler le déphasage, le transformateur de régulation (4) ayant un enroulement de régulation (41) en parallèle avec le système électrique, et un enroulement d'ajustement (42) avec un élément d'ajustement pour fournir une tension de régulation de phase prédéterminée au premier transformateur ; et
un moyen de protection (6) servant à détecter un défaut interne du transformateur de régulation (4) ;

**caractérisé en ce que** le transformateur de régulation (4) comporte en outre un enroulement de stabilisation (43) à montage en triangle, et **en ce que** le moyen de protection (6) détecte un état de défaut interne lorsque le rapport ou la phase du courant différentiel de l'enroulement de régulation (41) et de l'enroulement de stabilisation (43) par rapport au courant de l'enroulement d'ajustement (42) dépasse une valeur prédéterminée, grâce à quoi le transformateur déphaseur est protégé.

**2.** Système selon la revendication 1, dans lequel le premier transformateur est un transformateur série (3) monté en parallèle dans le système électrique (1 ; 2) et ayant un enroulement série (31) et un enroulement d'excitation (32) pour fournir la tension à l'enroulement série.

**3.** Système selon la revendication 2, dans lequel une borne de l'enroulement de régulation (41) du transformateur de régulation (4) est connectée à une partie intermédiaire de l'enroulement série du transformateur série (3).

**4.** Système selon la revendication 1, dans lequel le premier transformateur est un transformateur principal (7) monté en parallèle dans le système électrique (1; 2).

**5.** Système selon l'une quelconque des revendications précédentes, dans lequel le transformateur de régulation (4) comporte, comme ajusteur de tension de réglage pour l'enroulement d'ajustement (42), un moyen d'inversion à semi-conducteur.

6. Système selon l'une quelconque des revendications précédentes, dans lequel ladite valeur prédéterminée est le rapport et, respectivement, la phase d'un état d'incident dans le système accompagnant une saturation magnétique du noyau.

7. Procédé de protection d'un système de transformateur déphaseur selon l'une quelconque des revendications précédentes, dans lequel l'existence d'un état de défaut interne du transformateur de régulation (4) est détectée par le rapport ou la phase du courant différentiel de l'enroulement de régulation (41) et de l'enroulement de stabilisation (43) par rapport au courant de l'enroulement d'ajustement (42).

8. Procédé de protection d'un système de transformateur déphaseur selon l'une quelconque des revendications 1 à 6, dans lequel l'existence d'un état de défaut interne du transformateur de régulation (4) est détectée d'après les courants de l'enroulement de régulation (41), de l'enroulement d'ajustement (42) et de l'enroulement de stabilisation (43) du transformateur de régulation (4).

9. Procédé de protection d'un système de transformateur déphaseur selon l'une quelconque des revendications 1 à 6, dans lequel l'existence d'un état de défaut interne du transformateur de régulation (4) est détectée lorsque le rapport de courant du courant différentiel de l'enroulement de régulation (41) et d'ajustement de stabilisation (43) par rapport à l'enroulement d'ajustement (42) dépasse une valeur prédéterminée.

10. Procédé selon la revendication 9, dans lequel ladite valeur prédéterminée est supérieure au rapport de courant d'un incident dans le système accompagnant une saturation magnétique du noyau.

11. Procédé de protection d'un système de transformateur déphaseur selon l'une quelconque des revendications 1 à 6, dans lequel

un état normal ou un état de défaut extérieur du transformateur de régulation (4) est détecté lorsque le rapport de courant du courant différentiel de l'enroulement de régulation (41) et de l'enroulement de stabilisation (43) par rapport à l'enroulement d'ajustement (42) est inférieur à une valeur de seuil, et
un état de défaut interne du transformateur de régulation (4) est détecté lorsque ledit rapport de courant est supérieur à ladite valeur de seuil.

12. Procédé de protection d'un système de transformateur déphaseur selon l'une quelconque des revendications 1 à 6, dans lequel un état de défaut interne du transformateur de régulation (4) est détecté d'après les courants de l'enroulement de stabilisation (43) et de l'enroulement de régulation (41) du transformateur de régulation (4).

# FIG. 1

# FIG. 2

# FIG. 4

# FIG. 3

## FIG. 5

## FIG. 6

## FIG. 7

# FIG. 8